# EUROPÄISCHE PATENTANMELDUNG

(11) **EP 4 782 083 A1**
(43) Veröffentlichungstag der Anmeldung: **29.07.2026**
(21) Anmeldenummer: 25153833.6
(22) Anmeldetag: 24.01.2025
(51) Int. Cl.: B01D 53/00, C01B 23/00, F25J 3/00

(54) **VERFAHREN UND ANLAGE ZUR BEARBEITUNG EINES KRYPTON, XENON, METHAN UND SAUERSTOFF ENTHALTENDEN EINSATZGEMISCHS**

(71) Anmelder: Linde GmbH, 82049 Pullach (DE)
(72) Erfinder: Hermann, Christian, 82538 Geretsried (DE); Meilinger, Matthias, 82515 Wolfratshausen (DE); Rieche, Paula, 06108 Halle (Saale) (DE); Grahl, Matthias, 82049 Pullach (DE); Salazar Duarte, Gabriel, 82049 Pullach (DE)
(74) Vertreter: Grundner, Sebastian

(57) **Zusammenfassung**

Es wird ein Verfahren zur Bearbeitung eines Einsatzgemischs vorgeschlagen, das ein Bilden eines ersten Stoffstroms (1) unter Verwendung des Einsatzgemischs, ein Bearbeiten des ersten Stoffstroms (1) in einer Katalyseanordnung (110), ein Entnehmen eines zweiten Stoffstroms (2) aus der Katalyseanordnung (110), und ein Bearbeiten des zweiten Stoffstroms (2) oder eines Teils hiervon in Form eines dritten Stoffstroms (3) in einer Adsorptionsanordnung (120) umfasst, wobei das Einsatzgemisch und der erste Stoffstrom (1) Krypton, Xenon, Methan und Sauerstoff enthalten, wobei unter Verwendung der Katalyseanordnung (110) zumindest ein Teil des Methans in dem zweiten Stoffstrom (2) mit Sauerstoff katalytisch zu Kohlendioxid und Wasser umgesetzt wird, wobei zumindest ein Teil des Kohlendioxids und Wassers zusammen mit zumindest einem Teil des Kryptons, Xenons und Sauerstoffs aus dem ersten Stoffstrom (1) in den zweiten Stoffstrom (2) und in den dritten Stoffstrom (3) überführt werden, wobei unter Verwendung der Adsorptionsanordnung (120) zumindest ein Teil des Kohlendioxids und Wassers in dem dritten Stoffstrom (3) entfernt werden, und wobei die Adsorptionsanordnung (120) mehrere Adsorberbehälter (121) aufweist, **dadurch gekennzeichnet,** dass die Adsorberbehälter (121) während eines einem Adsorptionszeitraum nachgeschalteten Spülzeitraums periodisch unter Verwendung eines Stickstoff enthaltenden vierten Stoffstroms (4) einer Spülung unterworfen werden, wobei während des Spülzeitraums den Adsorberbehältern (121) ein fünfter Stoffstrom (5) entnommen wird, der bei der Spülung desorbierte Komponenten aufweist, wobei der fünfte Stoffstrom (6) oder ein Teil hiervon einer weiteren Bearbeitung in dem Verfahren unterworfen wird.

Eine Anlage (100) ist ebenfalls Gegenstand der vorliegenden Erfindung.

## Beschreibung

Die vorliegende Offenbarung betrifft ein Verfahren und eine Anlage zur Bearbeitung eines Krypton, Xenon, Methan und Sauerstoff enthaltenden Einsatzgemischs.

### Hintergrund

Die Herstellung von Luftprodukten in flüssigem oder gasförmigem Zustand durch kryogene Luftzerlegung in Luftzerlegungsanlagen ist bekannt und umfangreich in der Fachliteratur beschrieben. Statt vieler kann auf H.-W. Häring (Hrsg.), "Industrial Gases Processing", Wiley-VCH, 3006, insbesondere Abschnitt 2.2.5, "Cryogenic Rectification" verwiesen werden. Sofern nicht ausdrücklich abweichend definiert, haben die nachstehend verwendeten Begriffe die in der Fachliteratur übliche Bedeutung.

Die Edelgase Krypton und Xenon, die in atmosphärischer Luft in Konzentrationen von etwa 1 ppm und 0,09 ppm (Millionstel Anteile) enthalten sind, können durch die Verarbeitung größerer Luftmengen in Luftzerlegungsanlagen gewonnen werden. Die Siedetemperaturen von Krypton und Xenon liegen deutlich über den Siedetemperaturen von Stickstoff und Sauerstoff. Krypton und Xenon reichern sich daher zusammen mit Kohlenwasserstoffen in flüssigem Sauerstoff in den üblicherweise verwendeten Rektifikationskolonnen an. Bei der Herstellung von Krypton- und/oder Xenonprodukten erfolgt eine Anreicherung, um hierdurch ein Krypton/Xenon-Gemisch zu erhalten, und die Trennung dieses Gemischs, wie unten näher erläutert.

Ziel der vorliegenden Erfindung ist es, die Verarbeitung von Krypton und Xenon enthaltenden Gemischen zu verbessern und insbesondere den Verlust and Krypton und Xenon zu verbessern.

### Übersicht

Vor diesem Hintergrund werden ein Verfahren und eine Anlage zur Bearbeitung eines Krypton, Xenon, Methan und Sauerstoff enthaltenden Einsatzgemischs mit den Merkmalen der unabhängigen Ansprüche vorgeschlagen. Ausgestaltungen sind Gegenstand der abhängigen Ansprüche und der nachstehenden Erläuterungen.

Das vorgeschlagene Verfahren zur Bearbeitung eines Einsatzgemischs umfasst ein Bilden eines ersten Stoffstroms unter Verwendung des Einsatzgemischs, ein Bearbeiten des ersten Stoffstroms in einer Katalyseanordnung, ein Entnehmen eines zweiten Stoffstroms aus der Katalyseanordnung, und ein Bearbeiten des zweiten Stoffstroms oder eines Teils hiervon in Form eines dritten Stoffstroms in einer Adsorptionsanordnung.

In dem vorgeschlagenen Verfahren enthalten das Einsatzgemisch und der erste Stoffstrom Krypton, Xenon, Methan und Sauerstoff. Unter Verwendung der Katalyseanordnung wird zumindest ein Teil des Methans in dem zweiten Stoffstrom mit Sauerstoff katalytisch zu Kohlendioxid und Wasser umgesetzt, wobei zumindest ein Teil des Kohlendioxids und Wassers zusammen mit zumindest einem Teil des Kryptons, Xenons und Sauerstoffs aus dem ersten Stoffstrom in den zweiten Stoffstrom und den dritten Stoffstrom überführt werden. Unter Verwendung der Adsorptionsanordnung wird zumindest ein Teil des Kohlendioxids und Wassers in dem dritten Stoffstrom entfernt.

Die Adsorptionsanordnung weist mehrere Adsorberbehälter auf, wobei die Adsorberbehälter während eines Spülzeitraums, der einem Adsorptionszeitraum nachgeschaltet ist, jeweils (zeitlich versetzt zueinander) unter Verwendung eines Stickstoff enthaltenden vierten Stoffstroms einer Spülung unterworfen werden, und wobei während des Spülzeitraums den Adsorberbehältern ein fünfter Stoffstrom entnommen wird, der bei der Spülung desorbierte Komponenten aufweist.

Das vorgeschlagene Verfahren ist insbesondere dadurch gekennzeichnet, dass der fünfte Stoffstrom oder ein Teil hiervon einer weiteren Bearbeitung in dem Verfahren unterworfen wird. Auf diese Weise können anderenfalls während einer Regeneration der Adsorberbehälter verloren gehendes Krypton und Xenon zurückgewonnen werden.

Das vorgeschlagene Verfahren beruht insbesondere auf der Erkenntnis, dass in der Adsorptionsanordnung bei der Regeneration herkömmlicherweise ein nennenswerter Anteil an Produkt, insbesondere Xenon, aber auch Krypton, verloren geht. Dieser Verlust kommt insbesondere bei einem Wechsel von einem Adsorberbehälter zum anderen zum Tragen. Die Edelgasverluste wurden kürzlich durch Messungen in einer realen Produktionsanlage bestätigt, wie unten genauer erläutert.

Dem Adsorptionszeitraum ist insbesondere ein Druckabbau während eines Druckabbauzeitraums nachgeschaltet und die Spülung erfolgt insbesondere bereits während des Druckabbauzeitraums und/oder direkt anschließend hieran. Mit anderen Worten umfasst der Spülzeitraum insbesondere den Druckabbauzeitraum oder einen Teil hiervon. Ein weiterer Teil des Spülzeitraums umfasst einen Zeitraum nach dem Druckabbauzeitraum und erfolgt auf einem geringeren Druckniveau als während des Adsorptionszeitraums. Die Spülung kann bereits als Teil einer Regeneration aufgefasst werden, die herkömmlicherweise dem Adsorptionszeitraum folgt.

Ausgestaltungen des vorgeschlagenen Verfahrens betreffen die weitere Bearbeitung des fünften Stoffstroms, oder des erwähnten Teils hiervon, in Form einer Verwendung bei der Bildung des ersten Stoffstroms. Mit anderen Worten wird der beladene fünfte Stoffstrom oder ein Teil hiervon also in das Verfahren zurückgeführt, und zwar zu einer Position stromauf der Katalyseanordnung.

Anders ausgedrückt kann, insbesondere in einer Druckabbauphase und in der Anfangsphase des Regenerierens im Anschluss hieran, über die erwähnte Spülung bzw. einen entsprechenden Spülschritt, Xenon und Krypton enthaltender Stickstoff erzeugt werden, der auf der Eintrittsseite der Katalyseeinheit, einem an sich bekannten Demethanisierungsskit, zurück in die Anlage gefahren wird, wodurch insbesondere Xenon zurückgewonnen werden kann. Hierbei wird auch Kohlendioxid teilweise zurück in die Anlage eingebracht. Die absolute Menge ist aber so gering, dass dies keinen großen Nachteil darstellt.

Andere Ausgestaltungen des vorgeschlagenen Verfahrens umfassen, was auch in den zuvor beschriebenen Ausgestaltungen der Fall sein kann, dass der Adsorptionsanordnung eine Rektifikationsanordnung nachgeschaltet ist. In einer entsprechenden anderen Ausgestaltung kann der vierte Stoffstrom in gleicher Richtung wie der dritte Stoffstrom durch die Adsorptionsbehälter geführt werden, und die weitere Bearbeitung des fünften Stoffstroms kann eine Überführung des fünften Stoffstroms oder dessen entsprechend verwendeten Teil in die Rektifikationsanordnung umfassen.

Das vorgeschlagene Verfahren und seine Ausgestaltungen umfassen insbesondere, dass das Einsatzgemisch 100 bis 500 ppm, beispielsweise ca. 200 ppm, auf Volumenbasis Xenon, 1.000 bis 5.000 ppm, beispielsweise 2.500 ppm, auf Volumenbasis Krypton und mehr als 99 Volumenprozent Sauerstoff enthält. Das vorgeschlagene Verfahren und seine Ausgestaltungen eignen sich also insbesondere für die Verwendung mit typischem Roh-Krypton/Xenon aus einer kryogenen Luftzerlegung bzw. einer sogenannten C1-Einheit wie unten erläutert.

Der vierte Stoffstrom kann insbesondere 1 bis 100 Volumenprozent, beispielsweise 5 bis 20 Volumenprozent, Stickstoff aufweisen. Eine derartige Zusammensetzung ermöglicht eine besonders effektive Desorption und weitere Bearbeitung des fünften Stoffstroms in dem Verfahren und seinen Ausgestaltungen. Eine Menge kann beispielsweise 100 bis 500 Normkubikmeter pro Stunde Stickstoff betragen. Der vierte Stoffstrom kann, wenn nicht ausschließlich aus Stickstoff gebildet, beispielsweise auch Argon und Sauerstoff umfassen. Der gebildete fünfte Stoffstrom kann, wie oben beschrieben, vor den Reaktor zur Methanverbrennung, also die Katalyseanordnung, gefahren werden d.h. das Edelgas wird recycelt. Besonders wirksam ist ein solcher Spülvorgang bei der Wiedergewinnung von Krypton, da Krypton leichter durch das Spülgas bzw. den vierten Stoffstrom desorbiert wird als Xenon.

In dem vorgeschlagenen Verfahren und seinen Ausgestaltungen kann, wie erwähnt, einen Druckabbau über einen ersten Teilzeitraum des Spülzeitraums und ein anschließendes Durchströmen der Adsorberbehälter mit dem vierten Stoffstrom unter Erhalt des fünften Stoffstroms über einen zweiten Teilzeitraum umfassen. An den Spülzeitraum kann sich ein herkömmlicher Regenerationsbetrieb während eines Regenerationszeitraums anschließen.

Das vorgeschlagene Verfahren und seine Ausgestaltungen können dabei umfassen, dass die weitere Verwendung des fünften Stoffstroms nur während des Spülzeitraums erfolgt. Auf diese Weise kann verhindert werden, dass zu späteren Zeiträumen ein kein oder wenig Edelgas enthaltendes Gas oder Gasgemisch zurück in die Anlage geführt oder an die Rektifikationsanordnung weitergeleitet und auf diese Weise das zu bearbeitende Gasvolumen beträchtlich und unnötigerweise erhöht wird.

Das vorgeschlagene Verfahren und seine Ausgestaltungen können auch umfassen, dass der Spülbetrieb oder eine übliche Regenerierung der Adsorberbehälter erst dann eingeleitet wird, wenn ein in dem Adsorberbehälter erfasster Kohlendioxidgehalt einen vorgegebenen Schwellwert überschreitet. Auf diese Weise kann sichergestellt werden, dass eine Umschaltung zwischen den Adsorberbehältern möglichst spät durchgeführt wird und ein mit der Umschaltung verbundener Verlust daher bereits durch die reine Reduzierung der Umschaltungen minimiert werden kann. Der Zyklus aus Adsorption und Regeneration läuft in einer derartigen Ausgestaltung also möglichst lange, um die beim Wechsel entstehenden Verluste zu reduzieren. Die Höhe der Verluste sind gegeben durch die Anzahl der Wechsel bezogen auf die verarbeitete Feedgasmenge.

In Ausgestaltungen kann der Kohlendioxidgehalt über Messleitungen erfasst werden, die in einer vorgegeben Höhe bezogen auf ein in den Adsorberbehältern aufgenommenes Katalysatorbett aus den Adsorberbehältern herausgeführt sind. Die vorgegebene Höhe kann 50 bis 98%, insbesondere 80 bis 90%, einer Höhe des Katalysatorbetts entsprechen.

Um eine möglichst genaue Aussage zum Beladungszustand des Adsorptionsmaterials in den Adsorberbehältern, beispielsweise eines Molsiebs, ermitteln zu können, können derartige Ausgestaltungen von besonderem Vorteil sein. Gemessen wird das Kohlendioxid beispielsweise in ppm. Die Zyklussteuerung kann anhand der gemessenen Werte automatisiert werden, um damit die Adsorberlaufzeit zu optimieren. Der Kohlendioxidgehalt zeigt die nahezu vollständige Beladung des Adsorbers mit Kohlendioxid an. Hintergrund ist die Tatsache, dass Kohlendioxid als stärkeres Adsorbat während seiner Adsorption das vorher adsorbierte Xenon aus seinen Adsorptionsplätzen verdrängt und damit Xenon der Rektifikation stromab wieder zur Verfügung stellt. Ein weiterer positiver Effekt einer hohen Beladung des Adsorbers mit Kohlendioxid ist, wie erwähnt, die Reduzierung der Regenerierhäufigkeit, da nur während des Druckabbaus und der folgenden Regenerierung des Adsorbers der Edelgasverlust auftritt.

Die vorgeschlagene Anlage zur Bearbeitung eines Einsatzgemischs ist für ein Bilden eines ersten Stoffstroms unter Verwendung des Einsatzgemischs, ein Bearbeiten des ersten Stoffstroms in eine Katalyseanordnung, ein Entnehmen eines zweiten Stoffstroms aus der Katalyseanordnung, und ein Bearbeiten des zweiten Stoffstroms oder eines Teils hiervon in Form eines dritten Stoffstroms in einer Adsorptionsanordnung eingerichtet.

Hierbei enthalten das Einsatzgemisch und der erste Stoffstrom zumindest Krypton, Xenon, Methan und Sauerstoff, wobei die Anlage dafür eingerichtet ist, unter Verwendung der Katalyseanordnung zumindest einen Teil des Methans in dem zweiten Stoffstrom mit Sauerstoff katalytisch zu Kohlendioxid und Wasser umzusetzen, zumindest einen Teil des Kohlendioxids und Wassers zusammen mit zumindest einem Teil des Kryptons, Xenons und Sauerstoffs aus dem ersten Stoffstrom in den zweiten Stoffstrom und in den dritten Stoffstrom zu überführen, und unter Verwendung der Adsorptionsanordnung zumindest einen Teil des Kohlendioxids und Wassers in dem dritten Stoffstrom zu entfernen, wobei die Adsorptionsanordnung mehrere Adsorberbehälter aufweist und die Anlage dafür eingerichtet ist, die Adsorberbehälter periodisch während eines sich an einen Adsorptionszeitraum anschließenden Spülzeitraums einer Spülung unter Verwendung eines Stickstoff enthaltenden vierten Stoffstroms zu unterwerfen und während des Spülzeitraums einen fünften Stoffstrom zu bilden, der bei der Spülung desorbierte Komponenten aufweist.

Die Anlage ist insbesondere dadurch gekennzeichnet, dass sie dafür eingerichtet ist, den fünften Stoffstrom oder einen Teil hiervon einer weiteren Bearbeitung in dem Verfahren zu unterwerfen.

Zu weiteren Merkmalen und Vorteilen der vorgeschlagenen Anlage und ihrer Ausgestaltungen sei auf die oben erläuterten Merkmale und Vorteile des vorgeschlagenen Verfahrens und seiner Ausgestaltungen ausdrücklich verwiesen, da diese für die Anlage in im Wesentlichen gleicher Weise gelten.

Entsprechendes gilt auch für eine Anlage, die gemäß einer hier vorgeschlagenen Ausgestaltung dazu eingerichtet sein kann, ein Verfahren gemäß einer entsprechenden Ausgestaltung durchzuführen.

### Zeichnungen

Ausführungsformen werden nachfolgend rein beispielhaft unter Bezugnahme auf die beigefügte Zeichnung beschrieben, wobei
Figur 1 eine Anlage zur Bearbeitung eines Krypton und Xenon enthaltenden Einsatzgemischs veranschaulicht, die einer Ausführungsform zugrunde liegen kann;
Figur 2 eine Anlage zur Bearbeitung eines Krypton und Xenon enthaltenden Einsatzgemischs gemäß einer vorgeschlagenen Ausgestaltung veranschaulicht;

### Ausführungsformen

Die nachfolgend beschriebenen Ausführungsformen und Ausgestaltungen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale vorgeschlagener Verfahren und Vorrichtungen nicht abschließend und/oder beschränkend betrachtet werden.

Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Ansprüche oder als Beschränkungen von Äquivalenten hierzu zu betrachten sind, und dass andere Ausführungsformen verwendet und Änderungen vorgenommen werden können, ohne vom Umfang der Ansprüche abzuweichen.

Unterschiedliche Ausführungsformen können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus können andere Ausgestaltungen umfasst sein, die gegenwärtig nicht beansprucht sind, die aber in Zukunft beansprucht werden könnten, insbesondere wenn sie vom Umfang der unabhängigen Ansprüche umfasst sind.

Erläuterungen, die sich auf Vorrichtungen, Apparate, Anordnungen, Systeme usw. gemäß vorgeschlagenen Ausführungsformen beziehen, können auch für Verfahren, Prozesse, Methoden usw. gemäß anderen Ausführungsformen gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Die Konjunktion "und/oder" soll, wenn in einer Aufzählung vor dem letzten Begriff der Aufzählung verwendet, so verstanden werden, dass alle in der Aufzählung zuvor und danach genannten Begriffe beliebig miteinander kombiniert werden können. Mit anderen Worten ist mit "A, B und/oder C" "A und/oder B und/oder C" oder "wenigstens eines der Elemente A, B und C in beliebiger Kombination" gemeint.

Ein "Betriebszyklus" zeichnet sich im hier verstandenen Sinn durch eine Abfolge von Verfahrensschritten aus, die sich in einem anderen Betriebszyklus in im Wesentlichen derselben Weise wiederholen. Im Fall eines Adsorptionsverfahrens handelt es sich im einfachsten Fall um einen Adsorptionsschritt gefolgt von einem Desorptionsschritt bzw. entsprechende Betriebsmodi. Aufgrund der Sättigung des Adsorbens mit der zu adsorbierenden Gaskomponente ist eine derartige, wiederholte, oder "zyklische" Abfolge von Verfahrensschritten erforderlich. Betriebszyklen können auch unterschiedliche Dauern der jeweiligen Verfahrensschritte umfassen, beispielsweise aufgrund sich ändernder Zusammensetzungen, Temperaturen und dergleichen. Typischerweise ändern sich die Verfahrensschritte selbst nicht. Insbesondere können aber zwischen unterschiedlichen Betriebszyklen Einspeiserichtungen, Flussrichtungen usw. von Gasen in bestimmte Apparaturen umgekehrt werden.

In einer Adsorptionsanordnung werden zur Gewährleistung eines kontinuierlichen Betriebs typischerweise zwei oder mehr Adsorptionseinheiten in Form von Adsorptionsbehältern, die mit einem geeigneten Adsorptionsmaterial gefüllt sind, bereitgestellt. Die Adosrptionseinheiten werden zeitlich zueinander versetzt betrieben, so dass sich stets zumindest eine der Adsorptionseinheiten im Adsorptionsmodus befindet und zumindest eine weitere Adsorptionseinheit zeitgleich regeneriert wird. Die Regenerierung kann insbesondere unter Verwendung eines Regeneriergasstroms erfolgen, der in erwärmtem Zustand und im Gegenstrom (in Bezug auf den Adsorptionsmodus) durch die Adsorptionseinheiten geführt wird. Ein derartiger Betrieb erfordert ein Umschalten zwischen den Adsorptionsbehältern.

In den nachfolgend erläuterten Figuren sind Komponenten vergleichbarer oder identischer Funktion und/oder Bauart mit identischen Bezugszeichen angegeben. Auf wiederholte Erläuterungen wird lediglich aus Gründen der Übersichtlichkeit halber verzichtet. Erklärungen, die sich auf Anlagen oder deren Komponenten beziehen, gelten für hiermit durchgeführte Verfahrensschritte entsprechend und umgekehrt.

Die Herstellung von Krypton und Xenon auf Basis der kryogenen Luftzerlegung kann in drei Untereinheiten oder Schritten erfolgen, auf die typischerweise mit C1, C2 und C3 Bezug genommen wird. Die C1-Einheit oder der C1-Schritt ist in der Regel Teil einer Luftzerlegungsanlage oder wird in einer solchen durchgeführt, wie eingangs beschrieben. Hierbei wird sogenanntes Roh-Krypton/Xenon gebildet, das vergleichsweise geringe Konzentrationen von Krypton und Xenon aufweist und etwa 99,3 % Sauerstoff enthält. Dieses kann in Ausgestaltungen der vorliegenden Erfindung als ein Einsatzgemisch verwendet werden.

Das Roh-Krypton/Xenon aus mehreren Luftzerlegungsanlagen kann gesammelt und zu einer C2-Anlage transportiert werden. Ausgestaltungen der vorliegenden Erfindung können insbesondere eine derartige C2-Anlage bzw. ein hierin durchgeführtes Verfahren betreffen. Ein C2-Schritt dient zur Reinigung des Roh-Krypton/Xenons, hauptsächlich durch Entfernen des Sauerstoffs und katalytisches Umsetzen von Methan, das sich ebenfalls im Roh-Krypton/Xenon befinden kann, da es sich im Hauptkondensator einer Luftzerlegungsanlage anreichert. Das Produkt der C2-Anlage bzw. eines entsprechenden Verfahrensschritts stellt im Wesentlichen ein Gemisch aus Krypton und Xenon mit Spuren von Verunreinigungen dar. Der entfernte Sauerstoff wird üblicherweise als gasförmiges Sauerstoffprodukt bei niedrigem Druck verwendet. In mehreren C2-Anlagen gebildete Gemische können einer C3-Anlage bzw. einem entsprechenden Verfahrensschritt zugeführt werden, um reines Krypton und Xenon zu erzeugen. Die Bezeichnung der Einheiten oder Schritte mit C1, C2, C3 ist nicht einschränkend und die vorliegende Erfindung kann mit anderen Anordnungen von Anlagenteilen oder Verfahrensschritten verwendet werden.

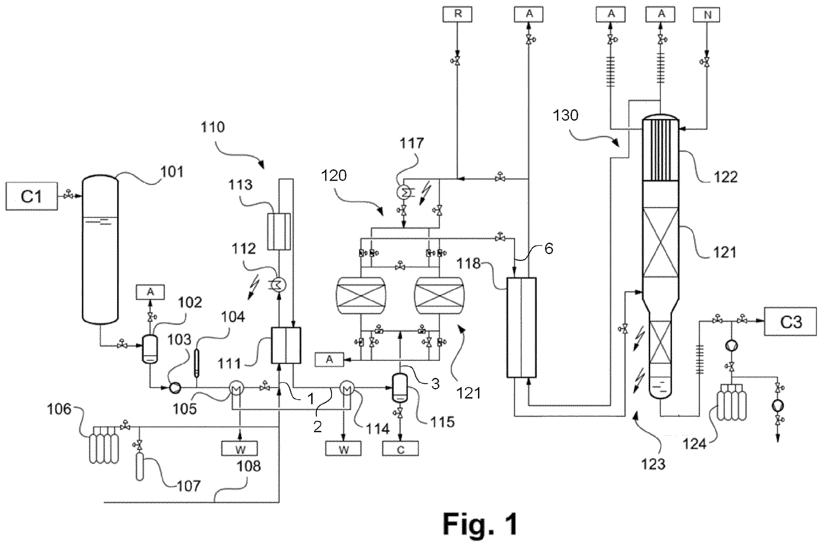

Figur 1 zeigt eine Anlage zur Bearbeitung eines Krypton, Xenon, Methan und Sauerstoff enthaltenden Einsatzgemischs, insbesondere des mehrfach erwähnten Roh-Krypton/Xenons. Die in Figur 1 veranschaulichte Anlage kann Ausgestaltungen der vorliegenden Erfindung zugrunde liegen, stellt aber selbst nicht notwendigerweise Ausgestaltung der vorliegenden Erfindung dar.

Die in Figur 1 veranschaulichte Anlage kann eine herkömmliche C2-Einheit darstellen, wie sie soeben erläutert wurde. Die Anlage kann beispielsweise einen Tank 101 umfassen, der beispielsweise über Tanklaster mit Roh-Krypton/Xenon aus mehreren C1-Einheiten befüllt werden kann, wie in Figur 1 abstrahiert mit C1 angegeben. Das Roh-Krypton/Xenon aus Tank 101 kann, wie erwähnt, als das an anderer Stelle dieser Offenbarung als Einsatzgemisch bezeichnete Komponentengemisch darstellen. Dieses kann in einen Trennbehälter 102 geleitet werden, aus dem ein Flashgas an die Atmosphäre A abgelassen oder wieder verflüssigt und in den Tank zurückgeleitet werden kann. Die Flüssigkeit aus dem Trennbehälter 102 kann mithilfe einer Pumpe 103 gepumpt, teilweise in einem Pufferbehälter 104 gepuffert und durch einen Wärmetauscher 105 geleitet werden, der mit Wasser W, Dampf oder Umgebungsluft betrieben wird, bevor sie optional mit weiteren Flüssigkeiten aus Tanks oder Druckgasbehältern 106 und 107, wie beispielsweise einem extern bereitgestellten Produkt einer C2-Einheit aus einem Tank 106, einem Gas aus einem Gasballon einer C3-Einheit aus einem Tank 107 oder einem Gas aus einem Sammler für gasförmigen Sauerstoff 108 einer weiteren C2-Einheit, vereinigt werden. Die Einheiten 102 bis 105 können in unterschiedlicher Anzahl in der Anlage bereitgestellt werden und jeweils einen Teil des Roh-Krypton/Xenons aufnehmen.

Das Roh-Krypton/Xenon wird in der in Figur 1 veranschaulichten Anlage anschließend in einer Katalyseanordnung 110 verarbeitet, die einen Gegenstromwärmetauscher 111, einen (elektrischen) Heizer 112, ein Katalysatorbett 113, einen mit Wasser W betriebenen Kühler 114 und einen Kondensatorbehälter 115 zum Entfernung eines Kondensats C aufweist. Im Katalysatorbett 113 der Katalyseanordnung 110 können Spuren von Methan, die in dem Roh-Krypton/Xenon enthalten sind, in Kohlendioxid und Wasser umgewandelt werden. Das entstehende Wasser (und gegebenenfalls bereits zuvor vorhandenes Wasser) kann in einem Kondensatorbehälter 115 zu Kondensat C kondensiert werden.

Im vorliegend verwendeten Sprachgebrauch wird der Katalyseanordnung dabei ein erster Stoffstrom 1 zugeführt, der unter Verwendung des Roh-Krypton/Xenons gebildet wird, und ein zweiter Stoffstrom 2 entnommen. Es sei betont, dass die Beschreibung bestimmter Anlagenkomponenten oder Apparate als zu einer Untereinheit, beispielsweise der Katalyseanordnung 110, gehörig nicht einschränkend zu verstehen ist und lediglich zur Bezugnahme dient.

Der zweite Stoffstrom, oder ein Teil hiervon, wird sodann in Form eines entsprechenden Stoffstroms, der hier als dritter Stoffstrom 3 bezeichnet wird, einer Adsorptionsanordnung 120 zugeführt, die ein Paar Adsorberbehälter 121 aufweist. Diese können beispielsweise ein Molsiebmaterial als Adsorptionsmittel aufweisen, das zur Regenerierung unter Verwendung eines Regenerationsgases R eingerichtet ist. Als Regenerationsgas kann R beispielsweise gasförmiger Stickstoff oder sogenannter Abfallsauerstoff verwendet werden. Das Regenerationsgas R kann mittels eines elektrischen Heizers 117 erhitzt und nach der Verwendung zur Regeneration in der Adsorptionsanordnung 120 als beladener Adsorptionsgasstrom an die Atmosphäre A abgegeben werden. In der Adsorptionsanordnung 120 werden insbesondere Wasser und Kohlendioxid adsorbiert und das hierdurch aufgereinigte Roh-Krypton/Xenon kann in Form eines Stoffstrom 6 über einen Gegenstromwärmetauscher 118 zu einer Rektifikationsanordnung 130 geleitet werden.

Die Rektifikationsanordnung 130 weist in dem in Figur 1 dargestellten Beispiel eine einzelne Rektifikationskolonne 131 mit einem Kopfkondensator 132 und Rückverdampfern 133 auf, die elektrisch betrieben werden können. Der Kopfkondensator 132 wird mit flüssigem Stickstoff N gekühlt, der in einem Verdampfungsraum des Kopfkondensators 132 verdampft und anschließend beispielsweise in die Atmosphäre A abgeblasen wird wie in Figur 1 dargestellt, wobei der entsprechende Stoffstrom links aus dem Kopfkondensator 132 abgezogen wird. Ein Sumpfstrom aus der Rektifikationskolonne 131 kann an eine C3-Einheit oder einen entsprechenden Reaktionsschritt weitergeleitet werden, wie mit C3 angegeben, oder in einem Zylinderbündel 134 gespeichert oder an einen Speicherbehälter weitergeleitet werden. Derartige Optionen sind in Figur 1 nicht gesondert dargestellt.

Im Beispiel der Figur 1 wird Kopfgas aus der Rektifikationskolonne 131 als Abfallsauerstoff, mit oder ohne Durchlauf durch den Gegenstromwärmetauscher 118, an die Atmosphäre A abgeblasen oder teilweise als das Regenerationsgas R zur Regeneration der Adsorptionseinheit 120 verwendet, wie zuvor anhand des Regenerationsgases R erläutert.

In der Anlage gemäß Figur 1 kann das Roh-Krypton/Xenon, und damit der erste Stoffstrom, beispielsweise ca. 200 ppm Xenon und 2500 ppm Krypton, geringfügige Mengen an Methan und im verbleibenden Rest von typischerweise mehr als 99 Molprozent Sauerstoff enthalten. Das Roh-Krypton/Xenon wird in der Adsorptionseinrichtung 120 über einen klassischen Molsiebprozess gereinigt. Insbesondere Wasser und Kohlendioxid werden in der Adsorptionseinrichtung 120 adsorptiv zurückgehalten. Ein Nachteil besteht allerdings darin, dass in der Adsorptionseinrichtung 120 auch Krypton und insbesondere Xenon adsorbiert werden. Beim Wechsel der Adsorptionsbehälter 121, d.h. einem Druckabbau und der Regeneration, kommt es daher zum Verlust der adsorbierten Edelgase, insbesondere von Xenon, da das beladene Regeneriergas in herkömmlichen Verfahren typischerweise an die Atmosphäre A abgegeben wird.

Hier setzen Ausgestaltungen der vorliegenden Erfindung an. Ziel ist es hierbei, eine möglichst hohe Ausbeute der im Roh-Krypton/Xenon enthaltenen Edelgase Krypton und Xenon zu ermöglichen. Mit anderen Worten sollen die Produktverluste im Prozess, insbesondere im Molsiebprozess, auf ein Minimum reduziert werden.

Die soeben angesprochenen Aspekte können durch Messungen belegt werden. So kann bei einer Messung von Xenon am Ausgang der Adsorberbehälter 121 nach einer Einleitung des Adsorptionsbetriebs festgestellt werden, dass insbesondere Xenon für ca. 20 min nicht mehr nachzuweisen ist. Dies belegt, dass Xenon in einem derartigen Zeitraum vollständig vom Adsorptionsmaterial adsorbiert wird. Nach dieser Zeit steigt die Austrittskonzentration von Xenon an, bis dieses auf einem ähnlichen Wert wie die Eintrittskonzentration vorliegt.

Bei Regenerierversuchen, die mit dem Ziel durchgeführt wurden, bei geringer Regeneriergasmenge möglichst viel des adsorbierten Xenons zurückzugewinnen, wurde festgestellt, dass nach einem Druckabbau in den Adsorberbehältern 121 und während einer anschließenden Spülphase Xenon desorbiert und mithilfe einer relativ geringen Menge eines Spülgases zurückgewonnen werden kann.

Eine sorgfältige Bilanzierung der Edelgasausbeute für die Feinreinigung in zwei realen Anlagen belegt einen Ausbeuteverlust von je ca. 5% aufgrund der erläuterten Effekte. In diesen Anlagen, die einer entsprechenden Untersuchung zugrunde lagen, wurde die Katalyseeinheit 110 mit einer Edelmetallkatalysatorschüttung bei ca. 480 °C betrieben. Die Katalyseeinheit 110 hat insbesondere die Aufgabe, Methan (und Lachgas) umzusetzen. Von der Katalyseeinheit 110 gelangt das Roh-Krypton/Xenon in den Molekularsiebadsorber, also die Adsorptionsanordnung 120. Hier werden aus der Methanverbrennung entstandene Feuchtigkeit und Kohlendioxid im Wesentlichen vollständig zurückgehalten. Anschließend gelangt das Roh-Krypton/Xenon in eine Rektifikationskolonne bzw. Rektifikationsanordnung, die Krypton und Xenon im Sumpf von dem leichteren Sauerstoff über Kopf abtrennt. Krypton und Xenon aus dem Sumpf wird anschließend in die C3-Sektion zur weiteren Auftrennung überführt.

Zum Roh-Krypton/Xenon, das aus dem Tank stammt und einen Sauerstoffgehalt von 99,7 Volumenprozent aufweisen kann, kann zeitweise Ballongas mit recyceltem Edelgas zugespeist werden. Obwohl die Zuspeisemenge mit beispielsweise 1 bis 2% der gesamten Feedgasmenge klein ist, kann der Gehalt an Krypton und Xenon stark ansteigen, da das Ballongas im Prozentbereich Edelgas enthält.

An einem Untersuchungstag wurde das aus der Adsorptionseinheit 110 austretende Gas nach Adsorberwechseln zu zwei Zeitpunkten untersucht. Der austretende Stoffstrom, hier als vierter Stoffstrom bezeichnet, betrug 600 Normkubikmeter pro Stunde. Beide Ereignisse lieferten ein sehr ähnliches Konzentrationsprofil.

Während der jeweils regenerierte Adsorberbehälter 121 hinzugeschaltet wird (ein Parallelbetrieb erfolgt über 15 min) sinkt die Sauerstoffkonzentration zunächst von einem Wert von 99,7 Volumenprozent auf ca. 70 bis 85 Volumenprozent ab, insbesondere da der "frische" Adsorberbehälter 121 noch Anteile an Stickstoff enthält. Ebenso sinkt die Kryptonkonzentration kurzzeitig aufgrund einer Adsorption von Krypton im frischen Adsorberbehälter 121 von ca. 2.500 auf 1.100 ppm ab. Die Xenonkonzentration fällt aufgrund von Adsorption über 20 min von 200 ppm auf 0 ppm auf Volumenbasis ab. Es gelangt also über 20 min hinweg keinerlei Xenon in eine nachgeschaltete Rektifikationseinheit 130 bzw. C2-Rektifikationssäule. Anschließend steigt der Wert über die Feedkonzentration an (Temperatureffekt durch Adsorptionswärme) und fällt dann wieder auf die Feedkonzentration ab.

Die fehlende Menge an Edelgas im austretenden Adsorbergas, d.h. Stoffstrom 6 gemäß Figur 1, kann bilanziert werden, wobei der Konzentrationsabfall und das darauffolgende Überschwingen berücksichtigt wurden. Es wurden ein Xenonverlust von 70 bis 75 Normlitern und ein Kryptonverlust von 130 Normlitern ermittelt. Natürlich wird während der Adsorberlaufzeit kontinuierlich Kohlendioxdid adsorbiert, welches Xenon wieder aus seinen Adsorptionsplätzen zu verdrängen vermag. Die Konzentrationsunterschiede im Vergleich zum Feedgas sind jedoch zu gering, um bilanziert werden zu können. Insbesondere ein Adsorptionsbehälter 121 in Unterlast, bei dem die Adsorptionskapazität für Kohlendioxid nur zum kleinen Teil ausgeschöpft ist, besitzt noch eine erhebliche Adsorptionskapazität für Krypton und Xenon und führt auf diese Weise zu beträchtlichen Ausbeuteverlusten.

Am Ende der Regenerationszeit wird der entsprechende Adsorberbehälter 121 mit Roh-Krypton/Xenon aufgedrückt (beispielsweise über einen Zeitraum von 40 min) und arbeitet dann mit dem anderen Adsorberbehälter 121 im Parallelbetrieb (beispielsweise über einen Zeitraum von 15 min). Danach erfährt der beladene Adsorber einen Druckabbau (beispielsweise über einen Zeitraum von 25 min). Es schließen sich beispielsweise 200 min Heizphase und 400 min Kühlphase mit beispielsweise 380 Normkubikmeter Stickstoff als Regeneriergas an. Das Regenerationsgas gelangt über einen Schalldämpfer über Dach in die Umgebungsluft. Die genannten Zeiten stellen bereits die verlängerten Zeiträume gemäß den vorgeschlagenen Ausgestaltungen der Erfindung dar, die auf Grundlage einer Kohlendioxidmessung ermittelt werden. Die ursprünglichen Auslegungszeiten sind 170 min Heizphase und 274 min Kühlen.

Der Druckabbau eines Adsorberbehälters 121 von 7,5 bar Überdruck zu Atmosphärendruck führt zu hohen Sauerstoffkonzentrationen (98 Volumenprozent Sauerstoff) am Regenerationsgasaustritt, da dieser vorher mit fast reinem Sauerstoff befüllt war. Am Ende des Druckabbaus werden am Regenerationsaustritt ca. 1.300 Xenon und 8.000 ppm Krypton, jeweils auf Volumenbasis, gemessen, bevor einströmendes Regeneriergas die Edelgase verdünnt. Mit anderen Worten wird schon während des Druckabbaus Edelgas in beträchtlichem Umfang desorbiert. Dies berücksichtigen die vorgeschlagenen Ausgestaltungen durch die Verwendung eines in einem entsprechenden Zeitraum erhaltenen Spülgases in der Anlage 100.

Wenige Minuten nach Start der Regeneriergaszufuhr mit beispielsweise ca. 380 Normkubikmetern pro Stunde sind Krypton und Xenon mengenmäßig nahezu vollständig aus dem Adsorberbehälter 121 ausgetragen. Dagegen wird Kohlendioxid erst später desorbiert. Der Peak des Austrags von Kohlendioxid liegt bei 3 bis 3,5 Volumenprozent und tritt ca. 2 h nach Start der Regeneriergaszufuhr auf. Jedoch läuft der Heizpeak, dessen Maximum bei 130 °C liegt, erst nach 4 h durch. Zu diesem Zeitpunkt sind die Konzentrationen von Kohlendioxid auf 300 ppm auf Volumenbasis abgefallen. Offensichtlich ist der Durchlauf des Heizpeaks eher für die Feuchtigkeitsdesorption von Bedeutung als für die Desorption von Kohlendioxid.

Ferner wurde getestet, ob ein Nachspülen eines beladenen Adsorbers nach Druckabbau mit "geringen" Stickstoffmengen noch erheblich Edelgasmengen zu desorbieren vermag. Eine solche Mischung könnte in einen Ballon überführt und vorn im Prozess wieder eingespeist werden. Dazu wurden drei Phasen hinsichtlich des Edelgasanfalls bilanziert: Druckabbau, Spülung mit Stickstoffmengen im Bereich von 10 bis 25 Normkubikmetern pro Stunde über 90 min und anschließende "normale" Regenerierung mit 380 Nm3/h.

Dazu wurde das Ablaufprogramm der Adsorberbehälter 121 so modifiziert, dass man die Druckabbauphase von 25 min auf 115 min verlängerte. Sobald der Druck in den Adsorberbehöltern 121 nach 25 min unterhalb von 0,1 bar Überdruck abgefallen war, wurde am an einem Einspeisestutzen für Regeneriergas Stickstoffgas von extern eingespeist. Druckaufnehmer und Rotameter wurden in geeigneter Weise und an geeigneten Positionen eingesetzt. Stickstofffluss bzw. Stickstoffmenge wurden beispielsweise über das Auswiegen eines Stickstoffbehälters vor und nach dem Spülversuch ermittelt. Zum Zeitpunkt zweier Messungen an aufeinanderfolgenden Tagen betrug die Austrittsmenge aus den Adsorberbehältern hinaus nur noch 380 Normkubikmeter pro Stunde Roh-Krypton/Xenon im Unterschied zu den vorangegangenen, oben beschriebenen Messungen mit 600 Normkubikmetern pro Stunde. Es wurden zwei Spülversuche durchgeführt, und zwar jeweils über 90 min mit 9,5 und 24,6 Normkubikmetern pro Stunde.

Am Ende des Spülvorgangs, unabhängig ob mit 9,5 und 24,6 Normkubikmetern pro Stunde, findet noch keine Absenkung der Konzentration von Xenon im Austrittsgas statt. Offensichtlich müsste länger als 90 min gespült werden oder mit höherem Fluss. Jedoch zeigt die Bilanzierung beim Spültest mit 24,6 Normkubikmetern pro Stunde, dass der ursprüngliche Xenonverlust von 6,04 auf 1,51% gesenkt werden kann, wenn das Druckabbaugas und das Spülgas wieder in den Prozess eingespeist werden kann.

Das Auffangen des Druckabbaugases macht nur 3% des gesamten Xenonverlusts aus. Offensichtlich ist Spülgas nötig, um Xenon aus seinen Adsorptionsplätzen zu lösen. Der Einsatz eines Spülgases ist für Krypton sehr effektiv. Durch seine geringere Adsorptionsfähigkeit kann im Spültest mit 24,6 Normkubikmetern pro Stunde der Kryptonverlust von 1,69 auf 0,09 % gesenkt werden.

Wenn der Heizpeak nach 4 h Regeneration den Adsorberaustritt passiert, wird zeitgleich nur noch sehr wenig Edelgas ausgetrieben. Die Xenonkonzentration im Regeneriergas steigt von weniger als 0,1 ppm auf Volumenbasis auf maximal 0,8 ppm auf Volumenbasis an und sinkt danach wieder ab. Krypton steigt zeitgleich bis auf 7 ppm auf Volumenbasis an.

Das aufzufangende Gas aus Druckabbau und Spülung enthält beim Spültest mit 24,6 Normkubikmetern pro Stunde im Mittel ein Verhältnis an Xenon zu Krypton zu Kohlendioxid von 1 zu 3,7 zu 8,5, d.h. noch erhebliche Kohlendioxidmengen. Diese spielen aber bei einer Wiedereinspeisung keine große Rolle, da die Gasmengen im Vergleich zum Roh-Krypton/Xenon, welches selbst 2.500 ppm Kohlendioxid auf Volumenbasis vor dem Adsorber enthält, klein sind.

Der austretende Spülstrom enthält während des Spültest mit 24,6 Normkubikmetern pro Stunde noch 20 min lang eine höhere Sauerstoffkonzentration oberhalb von 90 Volumenprozent und sinkt nach 20 min sehr schnell auf Gehalte kleiner als 1 Volumenprozent Sauerstoff ab. Damit muss ein Speicher bzw. der Weg zur direkten Wiedereinspeisung sauerstoffgeeignet sein, d.h. ausgelegt für Gehalte von mehr als 23,5 Volumenprozent. Insgesamt müssten pro Spülvorgang ca. 40 Normkubikmeter pro Stunde aufgenommen bzw. mit einem nachgeschaltetem Kompressor stromauf der Katalyseeinheit eingespeist werden können.

Noch vor dem Druckabbau der Adsorberbehälter steigt kontinuierlich die Sauerstoffkonzentration am Regeneriergasaustritt auf weit oberhalb von 21 Volumenprozent an. Synchron erhöhen sich die Edelgaskonzentrationen in der Regeneriergas-Austrittsleitung, die über dem Schalldämpfer eigentlich offen zur Atmosphäre ist und ausschließlich Umgebungsluft beinhalten sollte. Es wird vermutet, dass die Ventile an der Adsorberstation nicht absolut dicht schließen, so dass sauerstoffreiches Roh-Krypton/Xenon in den Regenerieraustritt eindringt. Da diese Leitung drucklos und zur Atmosphäre offen ist, werden kleine Leckagen aus dem Feedweg, der unter 7,5 bar Druck steht, sofort sichtbar. Über die Höhe des Edelgasverlusts kann auf Grund der Unkenntnis des Flusses in dieser drucklosen Leitung keine Aussage gemacht werden. Es wird ein nur geringer Verlust vermutet.

Insgesamt ergeben sich aus den ermittelten Daten konkrete Empfehlungen zur Ausbeuteerhöhung von Xenon, die in Ausgestaltungen des vorgeschlagenen Verfahrens berücksichtigt werden.

Das Auffangen des Druckabbaugases und des Spülgases kann die Xenonverluste stark minimieren. So wurde der Ausbeuteverlust im Fall des Spültest mit 24,6 Normkubikmetern pro Stunde von 6,04 auf 1,51 % gesenkt, was 48,5 NI Xenon für jede Regeneration bedeutet. Die beispielsweise in einem Ballon aufzufangende Spülgasmischung enthält anfangs eine hohe Sauerstoffkonzentration, so dass dieser Weg sauerstoffgeeignet sein muss. Man kann, wie in Ausgestaltungen der Erfindung der Fall, den Spülstrom auch ohne Pufferbehälter direkt über einen Kompressor vor dem Methanreaktor einspeisen. Da Xenon relativ stark adsorbiert, wird mindestens ein Spülgasfluss von 25 Normkubikmetern pro Stunde über mindestens 90 min benötigt, um die Hauptmenge an Xenon aus dem Adsorber auszutreiben.

Die erheblichen Ausbeuteverluste treten nur während des Druckabbaus und der nachfolgenden Regeneration auf, d.h. je seltener ein Adsorberwechsel erfolgt, umso geringer sind die Xenonverluste. Da insbesondere bei Minderlast Adsorberschaltzyklen bisher nicht angepasst werden und damit die Adsorberbehälter 121 bei weitem noch nicht mit Kohlendioxid beladen sind, stehen große Bettbereiche noch für die Xenonadsorption zur Verfügung. Ein Ziel könnte sein, insgesamt die Beladung mit Kohlendioxid zu erhöhen, da das stärkere Adsorbat Kohlendioxid das vorher adsorbierte Xenon aus seinen Adsorptionsplätzen verdrängt.

Ausgestaltungen des vorgeschlagenen Verfahrens sehen hierzu vor, dass eine Analysenleitung auf einer bestimmten Betthöhe installiert wird und dieser Analysenpunkt eindeutig Kohlendioxidspuren (z.B. 2 ppm Kohlendioxid auf Volumenbasis) detektieren muss, bevor ein Adsorberwechsel eingeleitet wird. Die Schaffung einer zusätzlichen Analysenstelle im Adsorberbehälter 121 mit einer darauf abgestimmten Adsorbersteuerung ist relativ einfach umsetzbar.

Beladungskapazität der Adsorberbehälter 121 mit Kohlendioxid, die maximiert werden sollte, wird beeinflusst von der Feedgasmenge, der Kohlendioxidkonzentration des Feeds (die einer Kohlenwasserstoffmenge im Roh-Krypton/Xenon entspricht) und der Eintrittstemperatur in die Adsorberbehälter. Insbesondere bei Unterlast der Feinreinigung des Roh-Krypton/Xenon sind die anteilsmäßigen Xenonverluste überproportional hoch, da die Regenerationsfrequenz derzeit nicht angepasst wird.

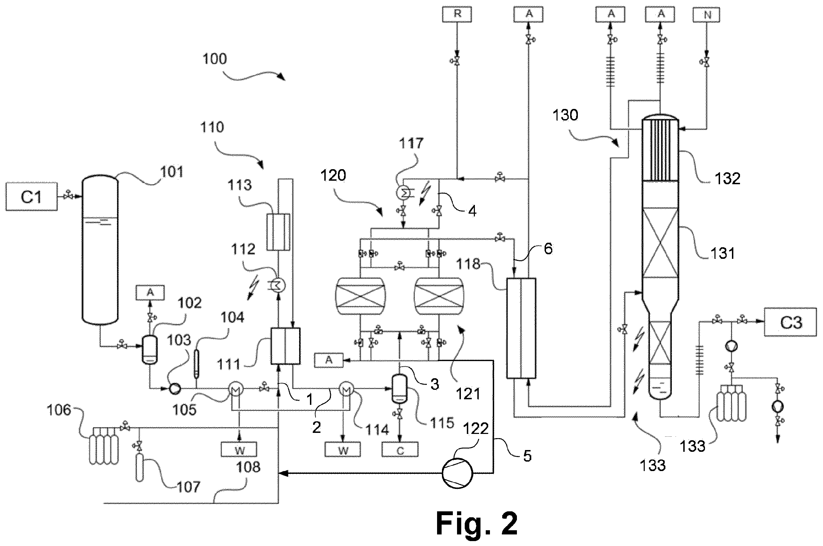

In Figur 2 ist eine Anlage gemäß einer Ausgestaltung der Erfindung veranschaulicht und mit 100 bezeichnet. Wie hier veranschaulicht, können die Adsorberbehälter 121 während eines einem Adsorptionszeitraum nachgeschalteten Spülzeitraums periodisch unter Verwendung eines Stickstoff enthaltenden vierten Stoffstroms 4 einer Spülung unterworfen werden, wobei während des Spülzeitraums den Adsorberbehältern 121 ein fünfter Stoffstrom 5 entnommen wird, der bei der Spülung desorbierte Komponenten aufweist, wobei der fünfte Stoffstrom 5 oder ein Teil hiervon einer weiteren Bearbeitung in dem Verfahren unterworfen wird. Diese besteht hier darin, dass der fünfte Stoffstrom 5 mittels eines Verdichters 122 nach stromauf der Katalyseanordnung 120 zurückgeführt wird.

## Patentansprüche

1. Verfahren zur Bearbeitung eines Einsatzgemischs, das ein Bilden eines ersten Stoffstroms (1) unter Verwendung des Einsatzgemischs, ein Bearbeiten des ersten Stoffstroms (1) in einer Katalyseanordnung (110), ein Entnehmen eines zweiten Stoffstroms (2) aus der Katalyseanordnung (110), und ein Bearbeiten des zweiten Stoffstroms (2) oder eines Teils hiervon in Form eines dritten Stoffstroms (3) in einer Adsorptionsanordnung (120) umfasst, wobei das Einsatzgemisch und der erste Stoffstrom (1) Krypton, Xenon, Methan und Sauerstoff enthalten, wobei unter Verwendung der Katalyseanordnung (110) zumindest ein Teil des Methans in dem zweiten Stoffstrom (2) mit Sauerstoff katalytisch zu Kohlendioxid und Wasser umgesetzt wird, wobei zumindest ein Teil des Kohlendioxids und Wassers zusammen mit zumindest einem Teil des Kryptons, Xenons und Sauerstoffs aus dem ersten Stoffstrom (1) in den zweiten Stoffstrom (2) und in den dritten Stoffstrom (3) überführt werden, wobei unter Verwendung der Adsorptionsanordnung (120) zumindest ein Teil des Kohlendioxids und Wassers in dem dritten Stoffstrom (3) entfernt werden, und wobei die Adsorptionsanordnung (120) mehrere Adsorberbehälter (121) aufweist, **dadurch gekennzeichnet, dass** die Adsorberbehälter (121) während eines einem Adsorptionszeitraum nachgeschalteten Spülzeitraums jeweils periodisch unter Verwendung eines Stickstoff enthaltenden vierten Stoffstroms (4) einer Spülung unterworfen werden, wobei während des Spülzeitraums den Adsorberbehältern (121) jeweils ein fünfter Stoffstrom (5) entnommen wird, der bei der Spülung desorbierte Komponenten aufweist, wobei der fünfte Stoffstrom (5) oder ein Teil hiervon einer weiteren Bearbeitung in dem Verfahren unterworfen wird.

2. Verfahren nach Anspruch 1, bei dem die weitere Bearbeitung eine Verwendung bei der Bildung des ersten Stoffstroms (1) umfasst.

3. Verfahren nach Anspruch 1, bei dem der Adsorptionsanordnung (120) eine Rektifikationsanordnung (130) nachgeschaltet ist, bei dem der fünfte Stoffstrom (5) in gleicher Richtung wie der dritte Stoffstrom (3) durch die Adsorptionsbehälter (121) geführt wird, und bei dem die weitere Bearbeitung eine Überführung des fünften Stoffstroms (5) oder dessen Teil in die Rektifikationsanordnung (130) umfasst.

4. Verfahren nach einem der vorstehenden Ansprüche, bei dem das Einsatzgemisch 100 bis 500 ppm auf Volumenbasis Xenon, 1.000 bis 5.000 ppm auf Volumenbasis Krypton und mehr als 99 Volumenprozent Sauerstoff enthält.

5. Verfahren nach einem der vorstehenden Ansprüche, bei dem der vierte Stoffstrom (4) 1 bis 100 Volumenprozent Stickstoff aufweist.

6. Verfahren nach einem der vorstehenden Ansprüche, bei dem die Spülung einen Druckabbau über einen ersten Teilzeitraum des Spülzeitraums und ein anschließendes Durchströmen der Adsorberbehälter (121) mit dem vierten Stoffstrom (4) unter Erhalt des fünften Stoffstroms (5) über einen zweiten Zeitraum umfasst.

7. Verfahren nach einem der vorstehenden Ansprüche, bei dem die Spülung und/oder eine Regenerierung der Adsorberbehälter (121) erst dann eingeleitet wird, wenn ein in dem Adsorberbehälter (121) erfasster Kohlendioxidgehalt einen vorgegebenen Schwellwert überschreitet.

8. Verfahren nach Anspruch 7, bei dem der Kohlendioxidgehalt über Messleitungen erfasst wird, die in einer vorgegeben Höhe bezogen auf ein in den Adsorberbehältern (121) aufgenommenes Katalysatorbett aus den Adsorberbehältern (121) herausgeführt sind.

9. Verfahren nach Anspruch 8, bei dem die vorgegeben Höhe 50 bis 98% einer Höhe des Katalysatorbetts entspricht.

10. Anlage (100) zur Bearbeitung eines Einsatzgemischs, die für ein Bilden eines ersten Stoffstroms (1) unter Verwendung des Einsatzgemischs, ein Bearbeiten des ersten Stoffstroms (1) in einer Katalyseanordnung (110), ein Entnehmen eines zweiten Stoffstroms (2) aus der Katalyseanordnung (110), und ein Bearbeiten des zweiten Stoffstroms (2) oder eines Teils hiervon in Form eines dritten Stoffstroms (3) in einer Adsorptionsanordnung (120) eingerichtet ist, wobei das Einsatzgemisch und der erste Stoffstrom (1) zumindest Krypton, Xenon, Methan und Sauerstoff enthalten, wobei die Anlage (100) dafür eingerichtet ist, unter Verwendung der Katalyseanordnung (110) zumindest einen Teil des Methans in dem zweiten Stoffstrom (2) mit Sauerstoff katalytisch zu Kohlendioxid und Wasser umzusetzen, zumindest einen Teil des Kohlendioxids und Wassers zusammen mit zumindest einem Teil des Kryptons, Xenons und Sauerstoffs aus dem ersten Stoffstrom (1) in den zweiten Stoffstrom (2) und in den dritten Stoffstrom (3) zu überführen, und unter Verwendung der Adsorptionsanordnung (120) zumindest einen Teil des Kohlendioxids und Wassers in dem dritten Stoffstrom (4) zu entfernen, und wobei die Adsorptionsanordnung (120) mehrere Adsorberbehälter (121) aufweist, **dadurch gekennzeichnet, dass** die Anlage (100) dafür eingerichtet ist, die Adsorberbehälter (121) während eines einem Adsorptionszeitraum nachgeschalteten Spülzeitraums jeweils periodisch unter Verwendung eines Stickstoff enthaltenden vierten Stoffstroms (4) einer Spülung zu unterwerfen, während des Spülzeitraums den Adsorberbehältern (121) einen fünften Stoffstrom (5) zu entnehmen, der bei der Spülung desorbierte Komponenten aufweist, und den fünften Stoffstrom (5) oder ein Teil hiervon einer weiteren Bearbeitung in dem Verfahren zu unterwerfen.

11. Anlage (100) nach Anspruch 10, die zur Durchführung eines Verfahrens nach einem der Ansprüche 1 bis 9 eingerichtet ist.
